# EUROPEAN PATENT APPLICATION

(11) **EP 4 722 081 A1**
(43) Date of publication of application: **08.04.2026**
(21) Application number: 24815182.1
(22) Date of filing: 13.05.2024
(51) Int. Cl.: B62D 6/00, B60W 30/02, B62D 13/00, B62D 101/00, B62D 113/00

(54) **ARTICULATED VEHICLE CONTROL DEVICE, ARTICULATED VEHICLE CONTROL METHOD, AND ARTICULATED VEHICLE CONTROL PROGRAM**

(30) Priority: 31.05.2023 JP 2023089844
(71) Applicant: JTEKT CORPORATION, Kariya-shi, Aichi 448-8652 (JP)
(72) Inventor: TAMAIZUMI, Terutaka, Kariya-shi, Aichi 448-8652 (JP); TAMAKI, Hiromasa, Kariya-shi, Aichi 448-8652 (JP); NITTA, Nobuhiro, Tokyo 103-0022 (JP)
(74) Representative: Winter, Brandl - Partnerschaft mbB
(86) International application number: PCT/JP2024/017671
(87) International publication number: WO 2024/247698

(57) **Abstract**

An articulated vehicle (10) includes a tractor (20) and a trailer (30). A control device for the articulated vehicle is configured to execute a setting process and a non-transmission steering process. The setting process is a process of setting a target steered angle of the non-transmission steered wheel, using a value of a trailer sway variable as an input. The trailer sway variable includes at least one of the following two variables: a variable indicating behavior of the yaw angle of the articulated vehicle, and a front-wheel steered angle variable. The front-wheel steered angle variable is a variable indicating a steered angle of a steered front wheel of the tractor. The non-transmission steering process is a process of steering the non-transmission steered wheel in accordance with the target steered angle set by the setting process.

## Description

### TECHNICAL FIELD

The present disclosure relates to control devices for articulated vehicles, control methods for articulated vehicles, and control programs for articulated vehicles.

### BACKGROUND ART

For example, Patent Document 1 below describes a control device that addresses a so-called sway phenomenon in which a trailer of an articulated vehicle sways. This control device reduces the sway of the trailer through brake control when the sway phenomenon occurs.

### Related Art Documents

### Patent Documents

Patent Document 1: U.S. Unexamined Patent Application Publication No. 2019/0001944

### SUMMARY OF THE INVENTION

### Problem to be Solved by the Invention

In an articulated vehicle, it is more desirable to suppress the occurrence of a sway phenomenon itself than to reduce the sway of the trailer after the sway phenomenon has occurred.

### Means for Solving the Problem

1. One aspect of an embodiment provides a control device for an articulated vehicle. The articulated vehicle includes a tractor and a trailer towed by the tractor. The articulated vehicle includes a non-transmission steered wheel. The non-transmission steered wheel is a steered wheel that is steerable under control in a state in which power transmission with an operation unit provided in the tractor is disconnected. The operation unit is an interface configured to receive an intention of a driver to steer the articulated vehicle. The control device for the articulated vehicle is configured to execute a setting process and a non-transmission steering process. The setting process is a process of setting a target steered angle of the non-transmission steered wheel, using a value of a trailer sway variable as an input. The trailer sway variable includes at least one of the following two variables: a variable indicating behavior of a yaw angle of the articulated vehicle, and a front-wheel steered angle variable. The front-wheel steered angle variable is a variable indicating a steered angle of a steered front wheel of the tractor. The non-transmission steering process is a process of steering the non-transmission steered wheel in accordance with the target steered angle set by the setting process.

Another aspect of the present disclosure provides a control method for an articulated vehicle. The articulated vehicle includes a tractor and a trailer towed by the tractor. The articulated vehicle includes a non-transmission steered wheel. The non-transmission steered wheel is a steered wheel that is steerable under control in a state in which power transmission with an operation unit provided in the tractor is disconnected. The operation unit is an interface configured to receive an intention of a driver to steer the articulated vehicle. The control device for the articulated vehicle includes executing a setting process and executing a non-transmission steering process. The setting process is a process of setting a target steered angle of the non-transmission steered wheel, using a value of a trailer sway variable as an input. The trailer sway variable includes at least one of the following two variables: a variable indicating behavior of a yaw angle of the articulated vehicle, and a front-wheel steered angle variable. The front-wheel steered angle variable is a variable indicating a steered angle of a steered front wheel of the tractor. The non-transmission steering process is a process of steering the non-transmission steered wheel in accordance with the target steered angle set by the setting process.

Still another aspect of the present disclosure provides a control program for an articulated vehicle. The articulated vehicle includes a tractor and a trailer towed by the tractor. The articulated vehicle includes a non-transmission steered wheel. The non-transmission steered wheel is a steered wheel that is steerable under control in a state in which power transmission with an operation unit provided in the tractor is disconnected. The operation unit is an interface configured to receive an intention of a driver to steer the articulated vehicle. The control program for the articulated vehicle includes a command to cause a computer to execute a setting process and a non-transmission steering process. The setting process is a process of setting a target steered angle of the non-transmission steered wheel, using a value of a trailer sway variable as an input. The trailer sway variable includes at least one of the following two variables: a variable indicating behavior of a yaw angle of the articulated vehicle, and a front-wheel steered angle variable. The front-wheel steered angle variable is a variable indicating a steered angle of a steered front wheel of the tractor. The non-transmission steering process is a process of steering the non-transmission steered wheel in accordance with the target steered angle set by the setting process.

### BRIEF DESCRIPTION OF THE DRAWINGS

[FIG. 1] is a perspective view showing the configuration of an articulated vehicle according to a first embodiment.
[FIG. 2] is a diagram showing the configuration of a control system according to the embodiment.
[FIG. 3] is a flowchart showing a procedure of processing executed by a control device according to the embodiment.
[FIG. 4] is a timing chart showing effects of the embodiment.
[FIG. 5] is a timing chart showing effects of the embodiment.
[FIG. 6] is a flowchart showing a procedure of processing executed by a control device according to a second embodiment.
[FIG. 7] is a timing chart showing effects of the embodiment.
[FIG. 8] is a flowchart showing a procedure of processing executed by a control device according to a third embodiment.
[FIG. 9] is a timing chart showing effects of the embodiment.

### MODES FOR CARRYING OUT THE INVENTION

### <First Embodiment>

A first embodiment will be described below with reference to the drawings.

### "Configuration of Articulated Vehicle"

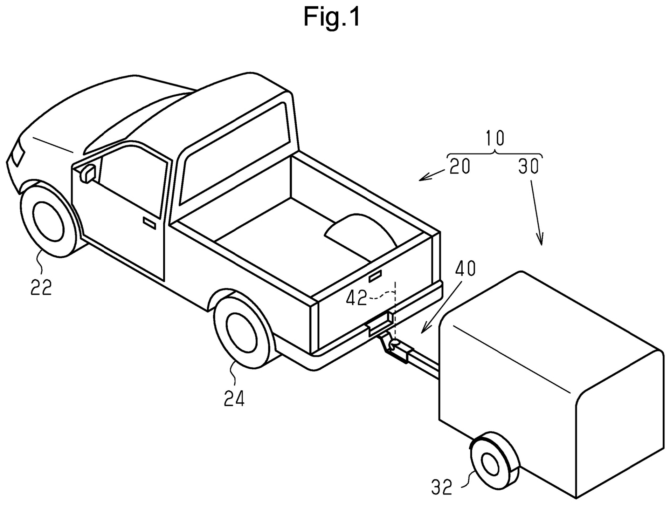

As shown in FIG. 1, an articulated vehicle 10 includes a tractor 20 and a trailer 30. The tractor 20 includes front wheels 22 and rear wheels 24. The front wheels 22 include two wheels, namely a right front wheel and a left front wheel, and the rear wheels 24 include two wheels, namely a right rear wheel and a left rear wheel. In FIG. 1 an enclosed box trailer is illustrated as the trailer 30. The trailer 30 includes wheels 32. The wheels 32 include two wheels, namely a right wheel and a left wheel.

The trailer 30 is connected to the rear of the tractor 20 via a ball joint 40. The ball joint 40 is a member that connects the trailer 30 to the tractor 20 so as to be rotatable about an axis 42. The axis 42 extends along the height direction of the tractor 20.

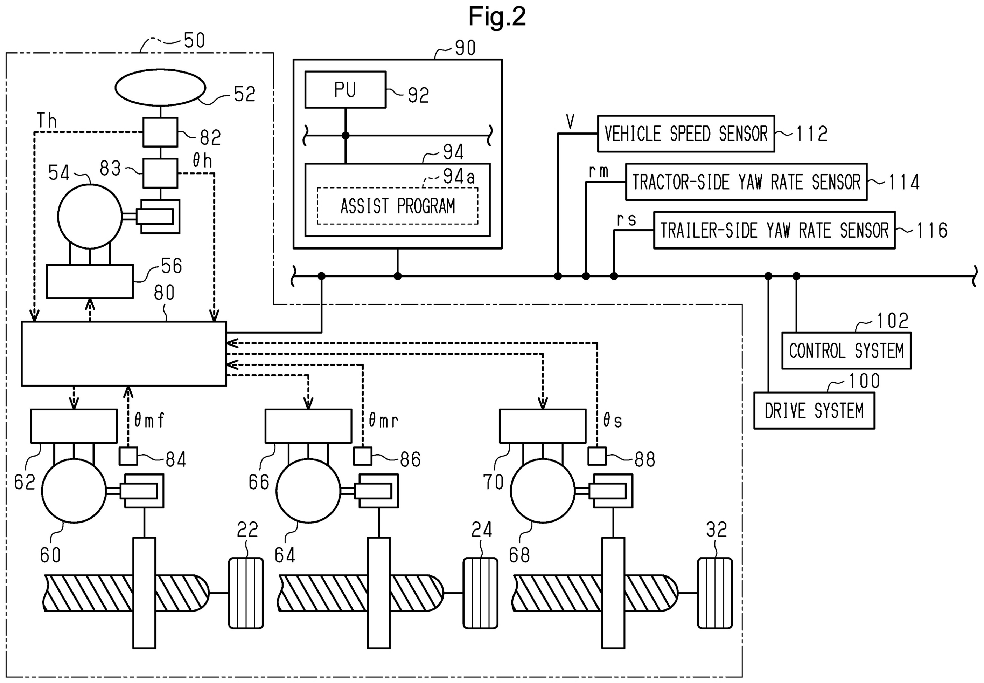

FIG. 2 shows part of the members included in the articulated vehicle 10. As shown in FIG. 2, a reaction force is applied from a reaction motor 54 to a steering wheel 52 in a steering system 50 included in the articulated vehicle 10. The steering wheel 52 is an operation unit that serves as an interface configured to receive the driver's intention to steer the articulated vehicle 10. The reaction force is a torque having a sign opposite to that of the torque applied to the steering wheel 52 by the driver. A voltage output from an inverter 56 is applied to terminals of the reaction motor 54.

Power is applied from a front-wheel steering motor 60 to the front wheels 22 included in the steering system 50. A voltage output from an inverter 62 is applied to terminals of the front-wheel steering motor 60. Power is applied from a rear-wheel steering motor 64 to the rear wheels 24 included in the steering system 50. A voltage output from an inverter 66 is applied to terminals of the rear-wheel steering motor 64. Power is applied from a trailer-side steering motor 68 to the wheels 32 included in the steering system 50. A voltage output from an inverter 70 is applied to terminals of the trailer-side steering motor 68. The front wheels 22, the rear wheels 24, and the wheels 24 are non-transmission steered wheels that are steerable in a state in which power transmission from the steering wheel 52 is disconnected.

A steering control device 80 controls the torque of the reaction motor 54 in order to control a controlled variable of the steering wheel 52 that is a controlled object. The controlled variable is the reactive force. The steering control device 80 controls the torque of the front-wheel steering motor 60 in order to control a controlled variable of the front wheels 22 that are controlled objects. The controlled variable is the steered angle of the front wheels 22. The steered angle is the turning angle of the tires of the front wheels 22. The steering control device 80 controls the torque of the rear-wheel steering motor 64 in order to control a controlled variable of the rear wheels 24 that are controlled objects. The controlled variable is the steered angle of the rear wheels 24. The steering control device 80 controls the torque of the trailer-side steering motor 68 in order to control a controlled variable of the wheels 32 that are controlled objects. The controlled variable is the steered angle of the wheels 32.

The steering control device 80 refers to steering torque Th detected by a torque sensor 82 in order to control the controlled variable. The steering torque Th is the torque input to the steering wheel 52. The steering control device 80 also refers to a steering angle θh detected by a steering angle sensor 83 in order to control the controlled variable. The steering control device 80 also refers to a rotation angle θmf of the front-wheel steering motor 60 detected by a rotation angle sensor 84 in order to control the controlled variable. The steering control device 80 also refers to a rotation angle θmr of the rear-wheel steering motor 64 detected by a rotation angle sensor 86 in order to control the controlled variable. The steering control device 80 also refers to a rotation angle θs of the trailer-side steering motor 68 detected by a rotation angle sensor 88 in order to control the controlled variable.

The tractor 20 includes a drive system 100. The drive system 100 includes at least one of the following two devices as a thrust generation device for the vehicle: an internal combustion engine, and a rotating electrical machine. The tractor 20 includes a braking system 102. The braking system 102 includes at least one of the following two devices: a device that decelerates the rotation of the wheels by frictional force, and a device that decelerates the rotation of the wheels by converting the power of the wheels into electrical energy. The device that decelerates the rotation of the wheels by performing the conversion into electrical energy may be shared with the rotating electrical machine of the drive system.

The tractor 20 includes an ADAS ECU 90. The ADAS ECU 90 operates the steering system 50, the drive system 100, and the braking system 102 in order to control controlled variables of the articulated vehicle 10 that is a controlled object. The controlled variables include vehicle speed, direction of travel, and hitch angle. The hitch angle is an angle formed between the front-rear direction of the tractor 20 and the front-rear direction of the trailer 30. The drive system 100 may include a drive control device that controls the internal combustion engine and the rotating electrical machine. In that case, "the ADAS ECU 90 operates the drive system 100" means that the ADAS ECU 90 outputs a command signal to the drive control device. The braking system 102 may include a brake control device that controls a device that decelerates the rotation of the wheels. In that case, "the ADAS ECU 90 operates the braking system 102" means that the ADAS ECU 90 outputs a command signal to the brake control device. Also, "the ADAS ECU 90 operates the steering system 50" means that the ADAS ECU 90 outputs a command signal to the steering control device 80.

The ADAS ECU 90 refers to a vehicle speed V detected by a vehicle speed sensor 112. The ADAS ECU 90 also refers to a tractor yaw rate rm detected by a tractor-side yaw rate sensor 114 in order to control the controlled variables. The ADAS ECU 90 also refers to a trailer yaw rate rs detected by a trailer-side yaw rate sensor 116 in order to control the controlled variables.

The ADAS ECU 90 includes a PU 92 and a storage device 94. The PU 92 is a software processing unit including at least one of the following: a CPU, a GPU, a TPU, and the like. An assist program 94a is stored in the storage device 94. The assist program 94a is a program that defines a command to cause the PU 92 to execute processing for suppressing a so-called sway phenomenon in which the trailer 30 sways.

### "Sway Suppression Control"

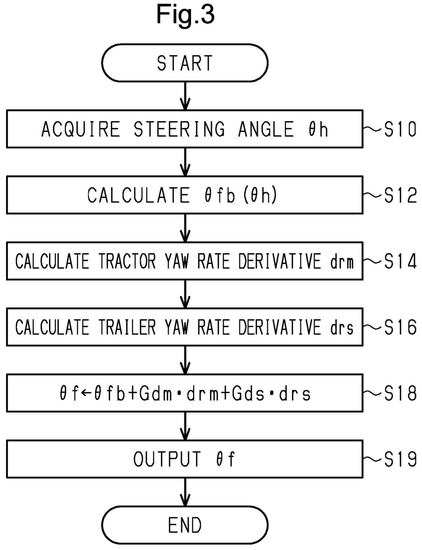

FIG. 3 shows a procedure of control for suppressing the sway phenomenon. The series of processes shown in FIG. 3 is implemented by repeatedly executing the assist program 94a by the PU 92, for example, at a predetermined cycle. In the following, step numbers for each process are represented by numbers preceded by "S."

In the series of processes shown in FIG. 3, the PU 92 first acquires the steering angle θh (S10). Next, the PU 92 calculates a base target value θfb using the steering angle θh as an input (S12). The base target value θfb is a base value of a front-wheel steered angle θf. The front-wheel steered angle θf is a command value of the turning angle of the front wheels 22 of the tractor 20. The PU 52 calculates the base target value θfb such that the steering angle ratio, namely the ratio between the steering angle θh and the steered angle of the front wheels 22, becomes a predetermined ratio. The PU 92 may change the predetermined ratio according to the steering angle θh.

Next, the PU 92 calculates the tractor yaw rate derivative drm (S14). The tractor yaw rate derivative drm is the first-order time derivative of the tractor yaw rate rm. The PU 92 also calculates the trailer yaw rate derivative drs (S16). The trailer yaw rate derivative drs is the first-order time derivative of the trailer yaw rate rs.

The PU 92 then substitutes, for the front-wheel steered angle θf, a value obtained by adding two correction amounts to the base target value θfb (S18). One of the correction amounts is a value obtained by multiplying the tractor yaw rate derivative drm by a gain Gdm. The gain Gdm has a negative value. The other correction amount is a value obtained by multiplying the trailer yaw rate derivative drs by a gain Gds. The gain Gds has a negative value.

As a result, the front-wheel steered angle θf is corrected from the base target value θfb by an amount opposite in sign to the tractor yaw rate derivative drm. In addition, the front-wheel steered angle θf is corrected from the base target value θfb by an amount opposite in sign to the trailer yaw rate derivative drs.

The PU 92 outputs the front-wheel steered angle θf to the steering control device 80 (S19). As a result, the steering control device 80 operates the inverter 62 to adjust the torque of the front-wheel steering motor 60 such that the steered angle of the front wheels 22 becomes the front-wheel steered angle θf.

When the processing of S19 is completed, the PU 92 ends the series of processes shown in FIG. 3. The tractor yaw rate derivative drm and the trailer yaw rate derivative drs correspond to a trailer sway variable and a variable indicating the behavior of yaw angle. The processing of S12 corresponds to the base target value setting process. The processing of S18 corresponds to the setting process. The processing of S19 corresponds to the non-transmission steering process. The processing of S14 corresponds to the tractor-side derivative value acquisition process. The processing of S16 corresponds to the trailer-side derivative value acquisition process.

### "Functions and Effects of Embodiment"

The PU 92 corrects the base target value θfb by a correction amount having a sign opposite to that of the tractor yaw rate derivative drm. In addition, the PU 92 corrects the base target value θfb by a correction amount having a sign opposite to that of the trailer yaw rate derivative drs. These correction amounts serve as amounts that reduce an increase in the magnitude of the yaw rate of the articulated vehicle 10. Therefore, an increase in the magnitude of the yaw rate of the articulated vehicle 10 is suppressed compared to a case where the base target value θfb is used as the final steered angle command value for the front wheels 22. As a result, the occurrence of the sway phenomenon can be suppressed.

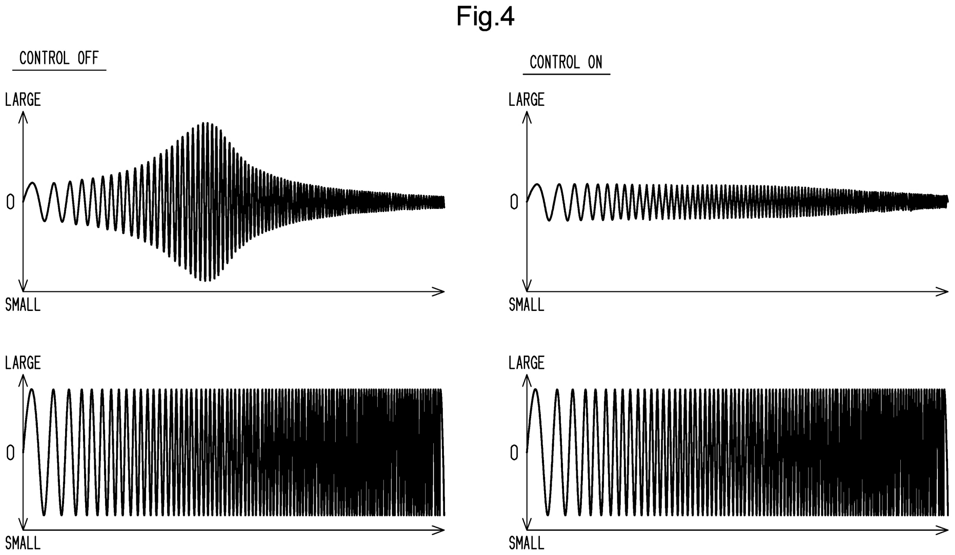

The lower left and right graphs in FIG. 4 show the transition of the steering angle θh. The upper left and right graphs in FIG. 4 show the transition of the yaw rate. The graphs labeled "CONTROL OFF" on the left side of FIG. 4 illustrate a case where the command value of the steered angle of the front wheels 22 of the tractor 20 is the base target value θfb. The graphs labeled "CONTROL ON" on the right side of FIG. 4 illustrate a case where the command value of the steered angle of the front wheels 22 of the tractor 20 is the front-wheel steered angle θf calculated by the processing illustrated in FIG. 3.

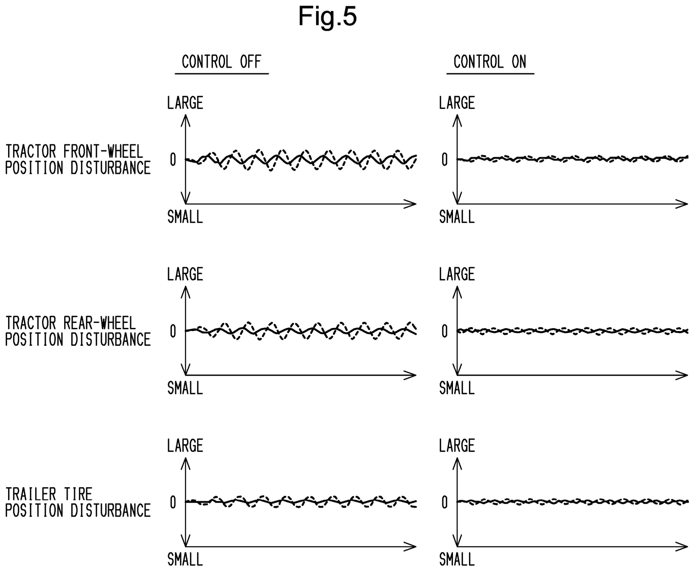

As shown in FIG. 4, vibration of the yaw rate is suppressed by executing the processing of FIG. 3. In FIG. 5, the continuous lines indicate the transition of the yaw rate of the tractor 20. In FIG. 5, the dashed lines indicate the transition of the yaw rate of the trailer 30. The upper graphs in FIG. 5 show the transition of the yaw rate in a case where a disturbance is applied to the front wheels 22 of the tractor 20. The middle graphs in FIG. 5 show the transition of the yaw rate in a case where a disturbance is applied to the rear wheels 24 of the tractor 20. The lower graphs in FIG. 5 show the transition of the yaw rate in a case where a disturbance is applied to the wheels 32 of the trailer 30. The graphs labeled "CONTROL OFF" on the left side of FIG. 5 illustrate a case where the command value of the steered angle of the front wheels 22 of the tractor 20 is the base target value θfb. The graphs labeled "CONTROL ON" on the right side of FIG. 5 illustrate a case where the command value of the steered angle of the front wheels 22 of the tractor 20 is the front-wheel steered angle θf calculated by the processing illustrated in FIG. 3.

As shown in FIG. 5, the influence of disturbances is suppressed by executing the processing of FIG. 3. That is, both the vibration of the yaw rate of the tractor 20 and the vibration of the yaw rate of the trailer 30 are suppressed.

According to the present embodiment described above, the following functions and effects can further be obtained.
(1) The base target value θfb is corrected by two correction amounts: a correction amount having a sign opposite to that of the tractor yaw rate derivative drm, and a correction amount having a sign opposite to that of the trailer yaw rate derivative drs. As a result, the sway phenomenon can be more reliably suppressed compared to a case where correction is made using only one of the two correction amounts.

### <Second Embodiment>

A second embodiment will be described below with reference to the drawings, focusing on differences from the first embodiment.

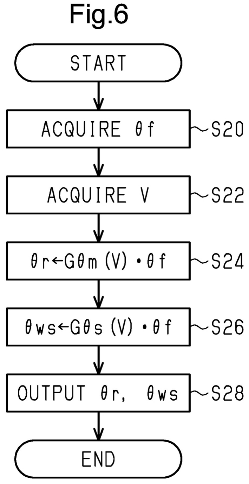

FIG. 6 shows a procedure of control for suppressing the sway phenomenon. The series of processes shown in FIG. 6 is implemented by repeatedly executing the assist program 94a by the PU 92, for example, at a predetermined cycle.

In the series of processes shown in FIG. 6, the PU 92 first acquires the front-wheel steered angle θf (S20). The front-wheel steered angle θf is set to a value equal to the base target value θfb when no correction is applied to the base target value θfb. Next, the PU 92 acquires the vehicle speed V (S22). The PU 92 then substitutes, for a rear-wheel steered angle θr, a value obtained by multiplying the front-wheel steered angle θf by a gain Gθm (S24). The rear-wheel steered angle θr is a command value of the steered angle of the rear wheels 24. The gain Gθm is changed by the PU 92 in accordance with the vehicle speed V. The PU 92 substitutes, for a trailer steered angle θws, a value obtained by multiplying the front-wheel steered angle θf by a gain Gθs (S26). The trailer steered angle θws is a command value of the steered angle of the wheels 32. The gain Gθs is changed by the PU 92 in accordance with the vehicle speed V. The processing of S24, S26 corresponds to the setting process.

The gains Gθm, Gθs are set to values such that the sideslip angle β1 of the tractor 20 and the sideslip angle β2 of the trailer 30 become zero. The gains Gθm, Gθs may be calculated by setting both sideslip angles β1, β2 to zero in a vehicle model such as a two-wheel model.

The PU 92 then outputs the rear-wheel steered angle θr and the trailer steered angle θws to the steering control device 80 (S28). As a result, the steering control device 80 operates the inverter 66 to adjust the torque of the rear-wheel steering motor 64 such that the steered angle of the rear wheels 24 becomes the rear-wheel steered angle θr. In addition, the steering control device 80 operates the inverter 70 to adjust the torque of the trailer-side steering motor 68 such that the steered angle of the wheels 32 becomes the trailer steered angle θws. The processing of S28 corresponds to the non-transmission steering process.

When the processing of S28 is completed, the PU 92 ends the series of processes shown in FIG. 6. The front-wheel steered angle θf corresponds to a trailer sway variable and a front-wheel steered angle variable.

### "Functions and Effects of Embodiment"

The PU 92 sets the rear-wheel steered angle θr and the trailer steered angle θws in accordance with the front-wheel steered angle θf. The rear-wheel steered angle θr and the trailer steered angle θws are open-loop manipulated variables for controlling the sideslip angles β1, β2 to zero. Therefore, the sway phenomenon of the trailer 30 can be suppressed.

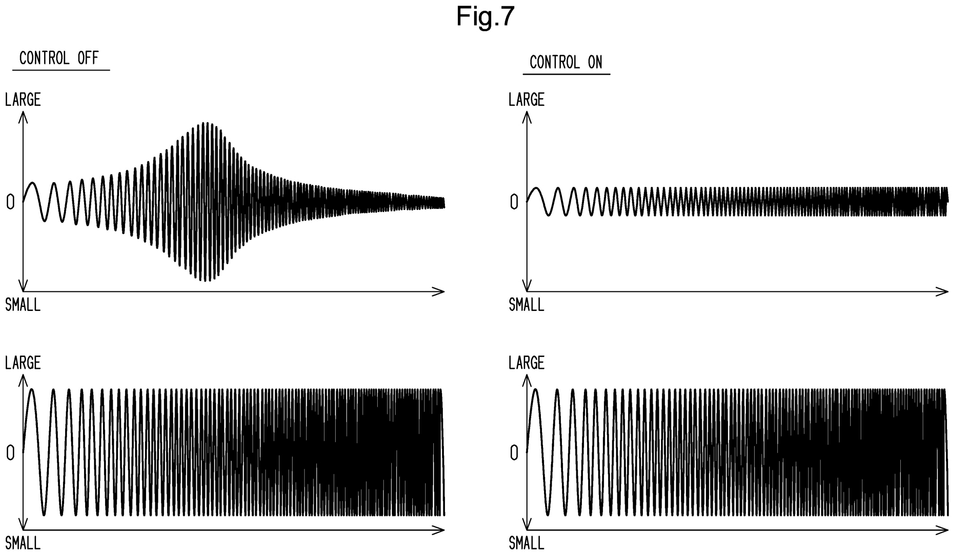

The lower left and right graphs in FIG. 7 show the transition of the steering angle θh. The upper left and right graphs in FIG. 7 show the transition of the yaw rate. The graphs labeled "CONTROL OFF" on the left side of FIG. 7 illustrate a case where the rear-wheel steered angle θr and the trailer steered angle θws are fixed. The graphs labeled "CONTROL ON" on the right side of FIG. 7 illustrate a case where the rear-wheel steered angle θr and the trailer steered angle θws are values calculated by the processing illustrated in FIG. 6.

As shown in FIG. 7, vibration of the yaw rate is suppressed by executing the processing of FIG. 6.

### <Third Embodiment>

A third embodiment will be described below with reference to the drawings, focusing on differences from the first embodiment.

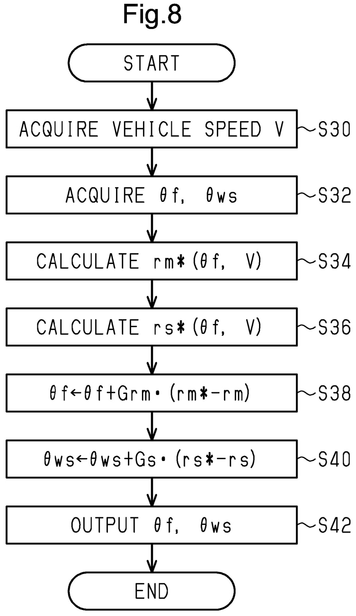

FIG. 8 shows a procedure of control for suppressing the sway phenomenon. The series of processes shown in FIG. 8 is implemented by repeatedly executing the assist program 94a by the PU 92, for example, at a predetermined cycle.

In the series of processes shown in FIG. 8, the PU 92 first acquires the vehicle speed V (S30). Next, the PU 92 acquires the front-wheel steered angle θf and the trailer steered angle θws (S32). The front-wheel steered angle θf is set to a value equal to the base target value θfb when no correction is applied to the base target value θfb. The trailer steered angle θws may be set to zero, indicating a neutral position. The trailer steered angle θws may also be set by the processing of S26. The PU 92 then calculates a tractor-side target yaw rate rm* using the front-wheel steered angle θf and the vehicle speed V as inputs (S34). The tractor-side target yaw rate rm* may be a yaw rate obtained by substituting the front-wheel steered angle θf and the vehicle speed V in a tractor model such as a two-wheel model. The PU 92 also calculates a trailer-side target yaw rate rs* using the front-wheel steered angle θf and the vehicle speed V as inputs (S36). The trailer-side target yaw rate rs* may be a yaw rate obtained by substituting the front-wheel steered angle θf and the vehicle speed V into a trailer model such as a two-wheel model.

The PU 92 corrects the front-wheel steered angle θf by a manipulated variable of feedback control, where the tractor yaw rate rm is the controlled variable (S38). The manipulated variable of the feedback control is the output value of a proportional element that takes the difference between the tractor yaw rate rm and the tractor-side target yaw rate rm* as an input. The gain Grm of the proportional element is positive. The PU 92 also corrects the trailer steered angle θws by a manipulated variable of feedback control, where the trailer yaw rate rs is the controlled variable (S40). The manipulated variable of the feedback control is the output value of a proportional element that takes the difference between the trailer yaw rate rs and the trailer-side target yaw rate rs* as an input. The gain Gs of the proportional element is negative.

The PU 92 then outputs the front-wheel steered angle θf and the trailer steered angle θws to the steering control device 80 (S42). As a result, the steering control device 80 operates the inverter 62 to adjust the torque of the front-wheel steering motor 60 such that the steered angle of the front wheels 22 becomes the front-wheel steered angle θf. In addition, the steering control device 80 operates the inverter 70 to adjust the torque of the trailer-side steering motor 68 such that the steered angle of the wheels 32 becomes the trailer steered angle θws.

When the processing of S42 is completed, the PU 92 ends the series of processes shown in FIG. 6. The tractor yaw rate rm and the trailer yaw rate rs correspond to a trailer sway variable and a variable indicating the behavior of yaw angle. The processing of S38, S40 corresponds to the setting process. The processing of S42 corresponds to the non-transmission steering process. The processing of S34, S36 corresponds to the target yaw rate setting process. The processing of S34 corresponds to the tractor-side target yaw rate setting process. The processing of S36 corresponds to the trailer-side target yaw rate setting process.

### "Functions and Effects of Embodiment"

The PU 92 sets the tractor-side target yaw rate rm* and the trailer-side target yaw rate rs* according to the vehicle speed V and the front-wheel steered angle θf. The PU 92 executes feedback control in which the tractor yaw rate rm is the controlled variable, and feedback control in which the trailer yaw rate rs is the controlled variable. The tractor-side target yaw rate rm* and the trailer-side target yaw rate rs* are set to values that occur when the articulated vehicle 10 travels normally in accordance with the vehicle speed V and the front-wheel steered angle θf. Therefore, the feedback control using the tractor-side target yaw rate rm* and the trailer-side target yaw rate rs* as the target values of the controlled variables can suppress the sway phenomenon.

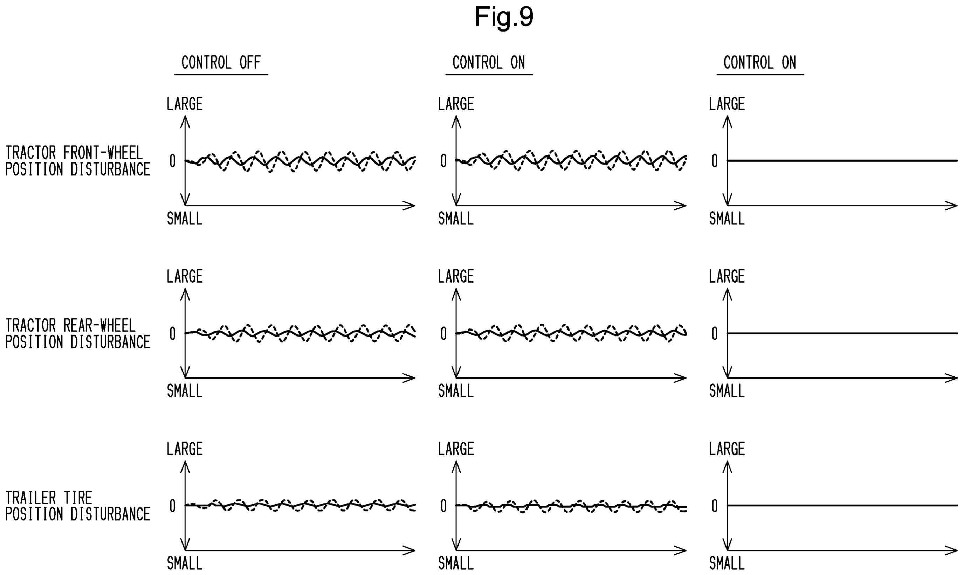

In FIG. 9, the continuous lines indicate the transition of the yaw rate of the tractor 20. In FIG. 9, the dashed lines indicate the transition of the yaw rate of the trailer 30. The upper graphs in FIG. 9 show the transition of the yaw rate in a case where a disturbance is applied to the front wheels 22 of the tractor 20. The middle graphs in FIG. 9 show the transition of the yaw rate in a case where a disturbance is applied to the rear wheels 24 of the tractor 20. The lower graphs in FIG. 9 show the transition of the yaw rate in a case where a disturbance is applied to the wheels 32 of the trailer 30. The graphs labeled "CONTROL OFF" on the left side of FIG. 9 illustrate a case where the rear-wheel steered angle θr and the trailer steered angle θws are fixed. The graphs labeled "CONTROL ON" in the middle of FIG. 9 illustrate a case where the processing of FIG. 6 is executed. The graphs labeled "CONTROL ON" on the right side of FIG. 9 illustrate a case where the processing of FIG. 6 and the processing of FIG. 8 are executed.

As shown on the right side of FIG. 9, a controller with robustness against disturbances is realized by employing feedback control. In contrast, as shown in the middle of FIG. 9, the processing of FIG. 6 is susceptible to disturbances because it is open-loop control.

### <Other Embodiments>

The above embodiments can be modified as described below. The above embodiments and the modifications described below can be combined as long as no technical contradictions arise.

### "Regarding correction process of base target value θfb"

- FIG. 3 illustrates the process of correcting the base target value θfb using both the tractor yaw rate derivative drm and the trailer yaw rate derivative drs. However, the present disclosure is not limited to this. The PU 92 may correct the base target value θfb by using one of the two derivatives, namely either the tractor yaw rate derivative drm or the trailer yaw rate derivative drs.
- The process of correcting the base target value θfb based on the behavior of yaw rate is not limited to a process in which the correction amount is the output value of a proportional element that takes at least one of the following derivatives as an input: the tractor yaw rate derivative drm, and the trailer yaw rate derivative drs. For example, the correction amount may be the output value of a phase-lead compensation process that takes at least one of the following two yaw rates as an input: the tractor yaw rate rm, and the trailer yaw rate rs.
- In the third embodiment, the base target value θfb is corrected based on the manipulated variable of the feedback control in which the yaw rate is the controlled variable. However, the present invention is not limited to this. For example, the front-wheel steered angle θf calculated by, for example, the processing shown in FIG. 3 may be corrected.

### "Regarding base target value setting process"

- In the processing of S12, the base target value θfb is set based on the steering angle θh that is an input variable. However, the present disclosure is not limited to this. For example, the base target value θfb may be set based on the vehicle speed V in addition to the steering angle θh. This allows the steering angle ratio to be changed according to the vehicle speed V.

### "Regarding setting of target steered angle in accordance with yaw angle behavior"

- The target steered angle that is set according to the output value of the proportional element that takes the tractor yaw rate derivative drm as an input is not limited to the front-wheel steered angle θf. This target steered angle may be, for example, the rear-wheel steered angle θr. In that case, the sign of the gain of the proportional element may be set to positive.
- The target steered angle that is set according to the output value of the proportional element that takes the trailer yaw rate derivative drs as an input is not limited to the front-wheel steered angle θf. This target steered angle may be, for example, the rear-wheel steered angle θr. In that case, the sign of the gain of the proportional element may be set to positive.

### "Regarding feedback control in which yaw rate is controlled variable"

- The process of setting the tractor-side target yaw rate rm* and the trailer-side target yaw rate rs* is illustrated in FIG. 8. However, the present disclosure is not limited to this. For example, the process may be a process of setting one of the two yaw rates, namely either the tractor-side target yaw rate rm* or the trailer-side target yaw rate rs*.
- The manipulated variable of the feedback control in which the tractor yaw rate rm is the controlled variable need not necessarily be reflected in the front-wheel steered angle θf. For example, this manipulated variable may be reflected in the rear-wheel steered angle θr.

### "Setting of rear-wheel target steered angle θr and trailer target steered angle θws"

- In the above embodiment, the front-wheel steered angle θf used in the processing of FIG. 6 is the base target value θfb or a value set by the processing of S38. However, the present disclosure is not limited to this. The front-wheel steered angle θf used in the processing of FIG. 6 may be, for example, a value set in the processing of S18. Alternatively, the front-wheel steered angle θf used in the processing of FIG. 6 may be a value set by the cooperation of the processing of S18 and the processing of S38. In other words, the base target value θfb may be a value that has been corrected, for example, by a correction amount obtained using the tractor yaw rate derivative drm as an input, and by a manipulated variable of feedback control in which the tractor yaw rate rm is a controlled variable.

### "Regarding control device"

- The ADAS ECU 90 and the steering control device 80 may be configured integrally.
- The control device is not limited to a configuration including the PU 92 and the storage device 94 and executing software processing. For example, the control device may include dedicated hardware circuits such as ASICs that execute at least part of the processing executed in the above embodiments. In other words, it is sufficient that the control device includes any of the following processing circuits (a) to (c). (a) A processing circuit including a processing device that executes all of the above processing according to a program and a program storage device such as a storage device storing the program. (b) A processing circuit including a processing device that executes part of the above processing according to a program, a program storage device, and a dedicated hardware circuit that executes the remaining processing. (c) A processing circuit including a dedicated hardware circuit that executes all of the above processing. There may be a plurality of software execution devices including a processing device and a program storage device, and a plurality of dedicated hardware circuits.

### "Regarding computer"

- The computer that executes a control program such as the assist program 94a is not limited to a computer mounted on the articulated vehicle 10. For example, the computer may be composed of both the PU 92 mounted on the articulated vehicle 10 and a mobile terminal of the driver. In that case, for example, the mobile terminal may execute the processes of S12 to S18 in FIG. 3.

### "Regarding vehicle"

- Not all of the front wheels 22, rear wheels 24, and wheels 32 of the articulated vehicle need to be steerable under control. For example, when the processing shown in FIG. 3 is executed, the rear wheels 24 and the wheels 32 may be wheels that cannot be steered under control.

### "Others"

- The base target value θfb may be set by the steering control device 80.

## Claims

1. A control device for an articulated vehicle including a tractor and a trailer towed by the tractor, wherein:
the articulated vehicle includes a non-transmission steered wheel;
the non-transmission steered wheel is a steered wheel that is steerable under control in a state in which power transmission with an operation unit provided in the tractor is disconnected;
the operation unit is an interface configured to receive an intention of a driver to steer the articulated vehicle;
the control device is configured to execute a setting process and a non-transmission steering process;
the setting process is a process of setting a target steered angle of the non-transmission steered wheel, using a value of a trailer sway variable as an input;
the trailer sway variable includes at least one of the following two variables: a variable indicating behavior of a yaw angle of the articulated vehicle, and a front-wheel steered angle variable;
the front-wheel steered angle variable is a variable indicating a steered angle of a steered front wheel of the tractor; and
the non-transmission steering process is a process of steering the non-transmission steered wheel in accordance with the target steered angle set by the setting process.

2. The control device for the articulated vehicle according to claim 1, wherein the setting process includes a process of setting the target steered angle in accordance with the behavior of the yaw angle.

3. The control device for the articulated vehicle according to claim 2, wherein:
the control device is configured to execute a base target value setting process;
the base target value setting process is a process of setting a base target value based on an input from the operation unit;
the base target value is a base value of the target steered angle; and
the setting process includes a process of setting the target steered angle by correcting the base target value in accordance with a variable indicating the behavior of the yaw angle.

4. The control device for the articulated vehicle according to claim 3, wherein:
the control device is configured to execute a tractor-side derivative acquisition process;
the tractor-side derivative acquisition process is a process of acquiring a derivative of a yaw rate of the tractor, the derivative being a variable indicating the behavior of the yaw angle; and
the setting process includes a process of correcting the base target value using the derivative of the yaw rate of the tractor as an input.

5. The control device for the articulated vehicle according to claim 3, wherein:
the control device is configured to execute a trailer-side derivative acquisition process;
the trailer-side derivative acquisition process is a process of acquiring a derivative of a yaw rate of the trailer, the derivative being a variable indicating the behavior of the yaw angle; and
the setting process includes a process of correcting the base target value using the derivative of the yaw rate of the trailer as an input.

6. The control device for the articulated vehicle according to claim 1, wherein:
the control device is configured to execute a target yaw rate setting process;
the target yaw rate setting process is a process of setting a target value of a yaw rate of the articulated vehicle; and
the setting process is a process of setting the target steered angle based on a manipulated variable of feedback control in which the yaw rate is a controlled variable.

7. The control device for the articulated vehicle according to claim 6, wherein the target yaw rate setting process is a process of setting the target value of the yaw rate based on the steered angle of the front wheel of the tractor and a vehicle speed.

8. The control device for the articulated vehicle according to claim 7, wherein:
the target yaw rate setting process includes a tractor-side target yaw rate setting process;
the tractor-side target yaw rate setting process is a process of setting a target value of a yaw rate of the tractor; and
the setting process includes a process of setting the target steered angle of the non-transmission steered wheel provided in the tractor in accordance with a manipulated variable of feedback control in which the yaw rate of the tractor is a controlled variable.

9. The control device for the articulated vehicle according to claim 7, wherein:
the target yaw rate setting process includes a trailer-side target yaw rate setting process;
the trailer-side target yaw rate setting process is a process of setting a target value of a yaw rate of the trailer; and
the setting process includes a process of setting the target steered angle of the non-transmission steered wheel provided in the trailer in accordance with a manipulated variable of feedback control in which the yaw rate of the trailer is a controlled variable.

10. The control device for the articulated vehicle according to claim 1, wherein:
the non-transmission steered wheel includes a rear wheel of the tractor and a wheel of the trailer; and
the setting process is a process of setting the target steered angle of the rear wheel of the tractor and the target steered angle of the trailer in accordance with a value of the front-wheel steered angle variable.

11. A control method for an articulated vehicle including a tractor and a trailer towed by the tractor, wherein:
the articulated vehicle includes a non-transmission steered wheel;
the non-transmission steered wheel is a steered wheel that is steerable under control in a state in which power transmission with an operation unit provided in the tractor is disconnected;
the operation unit is an interface configured to receive an intention of a driver to steer the articulated vehicle;
the control method includes executing a setting process and executing a non-transmission steering process;
the setting process is a process of setting a target steered angle of the non-transmission steered wheel, using a value of a trailer sway variable as an input;
the trailer sway variable includes at least one of the following two variables: a variable indicating behavior of a yaw angle of the articulated vehicle, and a front-wheel steered angle variable;
the front-wheel steered angle variable is a variable indicating a steered angle of a steered front wheel of the tractor; and
the non-transmission steering process is a process of steering the non-transmission steered wheel in accordance with the target steered angle set by the setting process.

12. A control program for an articulated vehicle including a tractor and a trailer towed by the tractor, wherein:
the articulated vehicle includes a non-transmission steered wheel;
the non-transmission steered wheel is a steered wheel that is steerable under control in a state in which power transmission with an operation unit provided in the tractor is disconnected;
the operation unit is an interface configured to receive an intention of a driver to steer the articulated vehicle;
the control program includes a command to cause a computer to execute a setting process and a non-transmission steering process;
the setting process is a process of setting a target steered angle of the non-transmission steered wheel, using a value of a trailer sway variable as an input;
the trailer sway variable includes at least one of the following two variables: a variable indicating behavior of a yaw angle of the articulated vehicle, and a front-wheel steered angle variable;
the front-wheel steered angle variable is a variable indicating a steered angle of a steered front wheel of the tractor; and
the non-transmission steering process is a process of steering the non-transmission steered wheel in accordance with the target steered angle set by the setting process.
